# EUROPEAN PATENT APPLICATION

(11) **EP 2 112 836 A1**
(43) Date of publication of application: **28.10.2009**
(21) Application number: 07817322.6
(22) Date of filing: 27.11.2007
(51) Int. Cl.: H04Q 3/78

(54) **METHOD AND COMMUNICATION TERMINAL OF CONTROLLING USER INFORMATION ON THE COMMUNICATION TERMIAL**

(30) Priority: 18.01.2007 CN 200710072888
(71) Applicant: Huawei Technologies Co., Ltd., Longgang District, Shenzhen Guangdong 518129 (CN)
(72) Inventor: WANG, Jun, Shenzhen Guangdong 518129 (CN); MIN, Guobing, Shenzhen Guangdong 518129 (CN); LIU, Qian, Shenzhen Guangdong 518129 (CN); JIAO, Jingmin, Shenzhen Guangdong 518129 (CN)
(74) Representative: Körber, Martin Hans
(86) International application number: PCT/CN2007/071132
(87) International publication number: WO 2008/089638

(57) **Abstract**

A method for controlling user information in a communication terminal includes: authenticating a control message upon reception of the control message; determining whether the control message type identifier in the control message is "Delete" or "Undo Delete" if the authentication is successful; and executing a deletion when the control message type identifier is "Delete" or undoing the deletion of user information in the communication terminal when the control message type identifier is "Undo Delete". A communication terminal where user information stored can be controlled includes a transceiver unit, a processing unit and a storage unit. With the present information, the legal owner of a communication terminal is able to control user information stored in the communication terminal so as to ensure the security of personal information and the stability of communication services.

## Description

This application claims a priority from the Chinese Patent Application No.200710072888.X, filed with the Chinese Patent Office on January 18, 2007 and entitled "Method for Controlling User Information Inside Communication Terminal and Communication Terminal for Executing Control", the contents of which are incorporated herein by reference in their entirety.

### Field of the Invention

The present invention relates a communication technology, and in particular, to a method for controlling user information inside a communication terminal and a communication terminal thereof.

### Background of the Invention

With the development of communication technologies, capabilities of a communication terminal are constantly enhanced. For example, the storage capacity of a communication terminal is increased to 120 numbers from past 20 numbers. More and more information can be stored in a communication terminal. As the capabilities of communication terminals are enhanced, users are able to enjoy more and more services, such as short message service, multimedia message service, and Internet browse. Based on these services, daily communication becomes much more convenient. However, communication terminals may be possessed by other people due to various reasons. Once a communication terminal is possessed by vicious people, user information stored in the communication terminal and functions of the communication terminal always bring a big loss to the user who loses the communication terminal. For example, vicious people may send deceitful messages to the numbers stored in the terminal for blackmail or make disturbing calls, thus hindering the life of the legal user of the communication terminal and giving great uncertainty to communication services. Therefore, the user must be able to control user information inside the communication terminal.

### Summary of the Invention

Embodiments of the present invention disclose a method for controlling user information inside a communication terminal and a communication terminal thereof so as to guarantee the security of user information inside the communication terminal.

A method for controlling user information inside a communication terminal includes:

determining a received message as a control message for controlling user information in the communication terminal, wherein the control message includes a check code identifier and a control message type identifier;

authenticating the control message according to the check code identifier; and

executing a corresponding operation on the user information in the communication terminal according to the control message type identifier if the authentication is successful.

A communication terminal includes:

a storage unit, adapted to store user information in the communication terminal;

a transceiver unit, adapted to receive a control message and transmit the control message to a processing unit; and

the processing unit, adapted to authenticate the control message and execute a corresponding operation on the user information in the storage unit according to a control message type identifier if the authentication is successful.

In the technical solution provided by embodiments of the present invention, when a communication terminal is not with the legal user or is even possessed by another person, the user may send a control message to the communication terminal to trigger a control operation in the communication terminal to delete user information stored in the communication terminal. When the user possesses the communication terminal again, the user may send another control message to the communication terminal to undo the deletion of user information in the communication terminal. In this way, the legal user is able to control user information in the communication terminal so as to ensure security of personal information and prevent illegal utilization of the information. This also guarantees normal usage of the communication terminal by the legal user. With this technical solution, communication services are stable.

### Brief Description of the Drawings

Figure 1 shows a flowchart of controlling user information inside a communication terminal according to an embodiment of the invention;

Figure 2 shows a flowchart where user A deletes user information inside a communication terminal according to an embodiment of the invention;

Figure 3 shows a flowchart where user B deletes user information inside a communication terminal according to an embodiment of the invention;

Figure 4 shows a flowchart where user B undoes the deletion of user information inside a communication terminal according to an embodiment of the invention; and

Figure 5 shows the structure of a communication terminal in which user information stored can be controlled.

### Detailed Description of the Invention

An embodiment of the present invention provides a method for controlling user information inside a communication terminal. The user of a communication terminal (hereinafter referred to as "user") sends a control message for controlling user information to the communication terminal. Upon reception of the control message, the communication terminal authenticates the message and when the authentication is successful, judges whether the control message type identifier in the control message is "Delete" or "Undo Delete". If the control message type identifier is "Delete", the communication terminal deletes user information inside the communication terminal; if the control message type identifier is "Undo Delete", the communication terminal undoes the deletion of user information inside the communication terminal.

The user may send the control message via a mobile terminal or a personal computer. The control message may be a short message, or an email, or a multimedia message. In the embodiments of the invention, a short message is sent via a mobile terminal to control user information inside the communication terminal. In practice, other means may be adopted. For example, the user may send an email from a personal computer to control user information inside the communication terminal. In the embodiments of the invention, the communication terminal is a mobile terminal. In practice, it may be any other communication terminal that receives information via a network. In the embodiments of the invention, user information includes phone numbers, short messages and call records the user previously stores in the communication terminal. The user information may also include call records, phone numbers and short messages newly stored in the communication terminal.

To better explain the objective, technical solution and advantages of the invention, the embodiments of the present invention are hereinafter described in detail with reference to the accompanying drawings.

Embodiment 1:

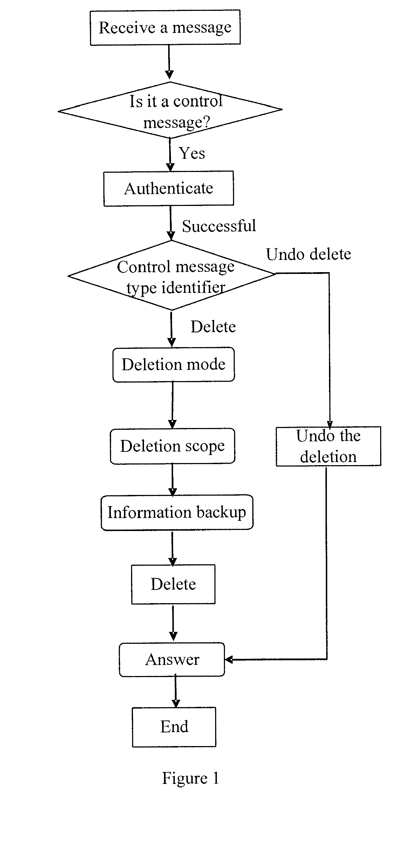

The process of controlling user information inside a communication terminal is described in detail according to an embodiment of the invention with reference to Figure 1, which shows a flowchart of controlling user information inside a communication terminal.

When a mobile terminal of a user is not with the user, the user may use another of his communication terminals or a communication terminal of another user to generate a control message and send the control message to the communication terminal via a communication network. The communication terminal executes the corresponding operation upon reception of the control message.

When the control message is generated, the communication terminal adds a special identifier to differentiate the control message from other non-control messages.

When editing the control message, the user needs to edit the receiver ID, check code identifier and control message type identifier in the control message. The receiver ID identifies the terminal that receives the control message. When the communication terminal is a mobile terminal, the receiver ID is an International Mobile Equipment Identity (IMEI), or the Subscriber Identity Module (SIM) number in the communication terminal, or any other identifier that uniquely identifies the communication terminal or SIM.

The check code identifier indicates the check code of the entire control message before the message is transmitted. Upon reception of the control message, the communication terminal may check the received control message in a preset check mode and compare the obtained check code with the received check code to know whether the received control message is correct.

The control message type identifier indicates whether the control message is intended to delete user information inside the communication terminal or to undo the deletion of user information inside the communication terminal. The control message type identifier may be "Delete" or "Undo Delete", or other special characters that are identifiable to the communication terminal. For example, "#1" indicates deleting user information inside the communication terminal and "#0" indicates undoing the deletion of user information inside the communication terminal. If the control message type identifier is "Delete", the communication terminal deletes user information stored in the communication terminal; if it is "Undo Delete", the communication terminal undoes the deletion of user information stored in the communication terminal. In this way, when the user gets the communication terminal again, the communication terminal can be used normally.

In addition, the control message may include other identifiers, such as the deletion mode identifier, information backup flag, deletion scope identifier and answer flag.

The deletion mode identifier specifies how to delete user information in the communication terminal when the type of the received control message is "Delete". The deletion mode identifier may be set to "Deletion upon Power-on", "Deletion upon Power-off", "Timed Deletion" or "Immediate Deletion". "Deletion upon Power-on" means a deletion is triggered to delete user information in the communication terminal when the communication terminal is powered on next time; "Deletion upon Power-off' means a deletion is triggered to delete user information in the communication terminal when the communication terminal is powered off; "Timed Deletion" means a deletion is triggered to delete user information in the communication terminal when the set time of deletion arrives; "Immediate Deletion" means a deletion is triggered immediately to delete user information in the communication terminal when user information is detected in the communication terminal. These deletion modes are only the modes provided in the embodiment of the invention. In practice, the deletion modes may be set according to the needs of the user or operator.

The information backup flag indicates whether to back up user information in the communication terminal before a deletion is executed. When the control message includes no information backup flag, the default processing mode of the user is effective. The user may set the default mode as not backing up user information or set the default mode as backing up user information. The user may also set the information backup flag so that "0" indicates not backing up user information in the communication terminal and "1" indicates backing up user information in the communication terminal. When the received control message includes an information backup flag, the communication terminal executes the operation as indicated by the information backup flag.

The answer flag indicates that the communication terminal returns a message of successful controlling to the terminal that sends the control message when the deletion or undoing operation is complete.

The deletion scope identifier specifies the scope of user information to be deleted. In a mobile terminal, user information may be stored in the memory of the mobile terminal or in the memory of the SIM of the mobile terminal. In the control message, the deletion scope identifier may be set to "0" to indicate deleting all user information in the communication terminal, or "1" to indicate deleting only user information in the memory of the communication terminal, or "2" to indicate deleting only user information in the memory of the SIM of the communication terminal. If the control message carries no deletion scope identifier, all user information in the communication terminal is to be deleted by default.

When the control message is sent to the communication network, the communication network delivers the control message to the communication terminal according to the receiver ID carried in the control message. The delivery mode may be a message delivery mode in the prior art and therefore not described herein.

Upon reception of the control message, the communication terminal determines the message as a control message according to the special identifier in the message and authenticates the control message. If the authentication is successful, the communication terminal judges the control message type identifier in the control message. If the control message type identifier is "Delete", the communication terminal deletes user information stored in the communication terminal; if it is "Undo Delete", the communication terminal undoes the deletion of user information stored in the communication terminal.

The authentication process is as follows: the communication terminal extracts the check code in the control message and compares this check code with the check code of the communication terminal to see whether the two codes are identical. If the two codes are not identical, the communication terminal discards the control message without any processing. If the two codes are identical, the communication terminal continues to judge whether the control message type identifier in the control message is "Delete" or "Undo Delete". In this embodiment of the invention, the check code is an IMEI. In practice, the check code may be any other information that uniquely identifies the communication terminal.

When the control message carries a deletion mode identifier, the communication terminal needs to set the mode of deletion, such as "Deletion upon Power-on"; when the control message carries no deletion mode identifier, the default mode is "Immediate Deletion" in this embodiment of the invention. The default deletion mode may be set by the user.

When the control message carries an information backup flag, the communication terminal judges whether it is necessary to back up user information in the communication terminal. If not necessary, the communication terminal continues with the deletion; if necessary, the communication terminal adds an information backup flag in the deletion operation and backs up the user information to a server before deleting the user information. In this embodiment of the invention, when no information backup flag is carried in the control message, backup is unnecessary by default. The default mode may be set by the user.

In addition, when the control message carries a deletion scope identifier, the communication terminal adds a deletion scope identifier in the deletion operation to specify the scope of user information to be deleted. In this embodiment of the invention, when no deletion scope identifier is carried in the control message, the communication terminal deletes all user information by default. The default deletion scope may also be set by the user.

After the deletion is triggered, the mobile terminal deletes the user information it stores.

In addition, when the control message carries an answer flag, a message of successful controlling is returned to the terminal that sends the control message upon completion of the deletion or undoing operation. In this embodiment of the invention, if no answer flag is carried in the control message, it is not necessary to return a message of successful controlling to the terminal that sends the control message by default. The default mode may also be set by the user.

The process of controlling user information in the communication terminal comes to an end.

The implementation of the technical solution provided in the embodiment of the invention is described hereunder with a specific example.

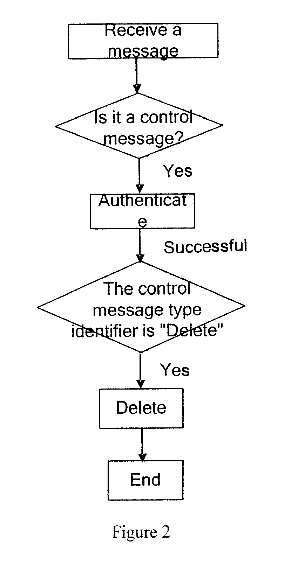

For example, user A loses a mobile terminal (SIM number: 13600000000). To prevent other people from abusing user information stored in the communication terminal, user A edits a control message and sends the control message to the lost communication terminal, as shown in Figure 2. The control message includes the receiver ID "13600000000", control message type "Delete" and check code "IMEI = 000000". Figure 2 shows a flowchart where user A controls user information inside a communication terminal in the embodiment of the invention.

The communication network first delivers the control message to the communication terminal according to the receiver ID. Upon reception of the control message, the communication terminal determines that the message is a control message according to a special identifier in the control message and authenticates the control message.

The communication terminal obtains the IMEI in the control message and reads the IMEI of the communication terminal to see whether the two codes are identical. If the two codes are not identical, the communication terminal discards the control message without processing; if the two codes are identical, the communication terminal obtains the control message type identifier in the control message. After the communication terminal determines that the control message type identifier is "Delete", the communication terminal triggers a deletion immediately to delete all user information in the communication terminal.

Embodiment 2:

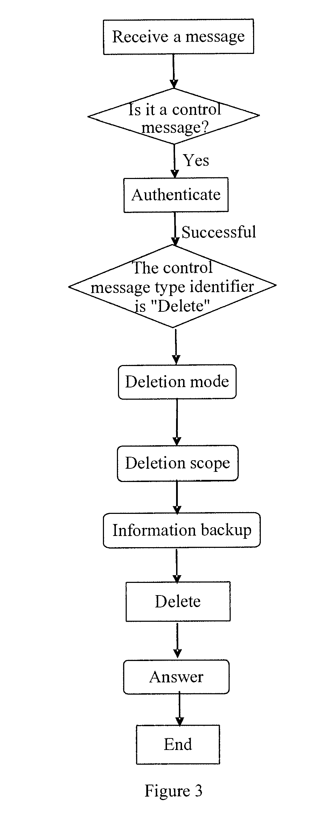

User B loses a mobile terminal and edits a control message. The control message includes the receiver ID "13611111111", control message type "Delete", check code "IMEI = 000000", deletion mode "Deletion upon Power-on", information backup flag, deletion scope "All", and answer flag, as shown in Figure 3. Figure 3 shows a flowchart where user B controls user information inside a communication terminal in the embodiment of the invention.

The communication network first delivers the control message to the communication terminal according to the receiver ID. Upon reception of the control message, the communication terminal determines that the message is a control message according to a special identifier in the control message and authenticates the control message.

The communication terminal obtains the IMEI in the control message and reads the IMEI of the communication terminal to see whether the two codes are identical. If the two codes are not identical, the communication terminal discards the control message without processing; if the two codes are identical, the communication terminal continues with the following processing.

The communication terminal obtains the deletion mode "Deletion upon Power-on", information backup flag, and deletion scope "All" in the control message, and sets the deletion operation to be triggered upon power-on, and stores all user information in the communication terminal to the server before the deletion.

When the communication terminal is powered on next time, the communication terminal triggers a deletion to send all user information in the communication terminal to the server for storage and delete all user information in the communication terminal. After the deletion is complete, the communication terminal returns a message of successful controlling. The whole processing comes to an end.

Embodiment 3:

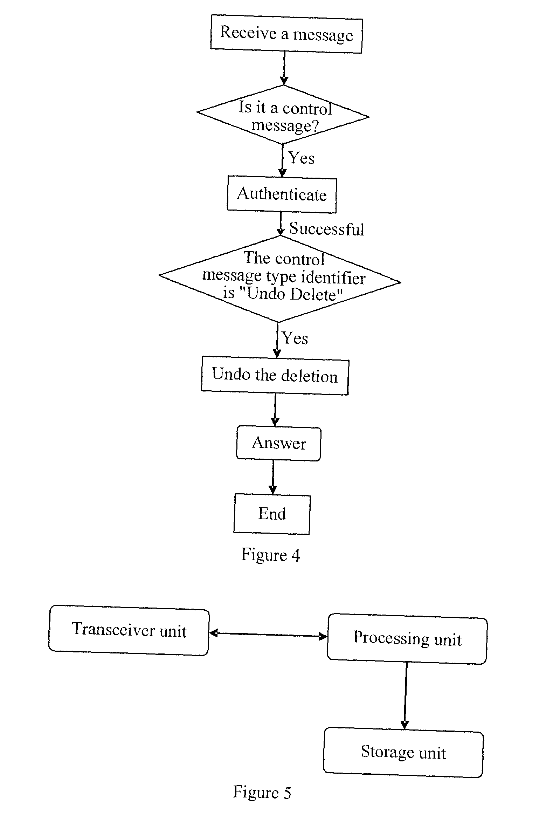

When user B finds the lost communication terminal, it is necessary to undo the deletion of user information in the communication terminal; otherwise user B is unable to use the information. Therefore, user B edits a control message, which includes the receiver ID "13611111111", control message type "Undo Delete", check code "IMEI = 000000", and answer flag, as shown in Figure 4. Figure 4 shows the flowchart where user B undoes the deletion of user information in a communication terminal according to this embodiment of the invention.

The communication network first delivers the control message to the communication terminal according to the receiver ID. Upon reception of the control message, the communication terminal determines that the message is a control message according to a special identifier in the control message and authenticates the control message.

The communication terminal obtains the IMEI in the control message and reads the IMEI of the communication terminal to see whether the two codes are identical. If the two codes are not identical, the communication terminal discards the control message without processing; if the two codes are identical, the communication terminal obtains the control message type identifier in the control message and determines that the control message type identifier is "Undo Delete", and then the communication terminal undoes the deletion of user information in the communication terminal and returns a message of successful controlling.

Another embodiment of the invention provides a communication terminal where user information stored can be controlled. The communication terminal includes a transceiver unit, a processing unit and a storage unit, as shown in Figure 5. Figure 5 shows the structure of a communication terminal where user information stored can be controlled according to an embodiment of the invention.

The transceiver unit is adapted to receive a control message and forward the control message to the processing unit; the processing unit is adapted to authenticate the control message and if the authentication is successful, judge whether the control message type identifier is "Delete" or "Undo Delete"; when the control message type identifier is "Delete", the processing unit executes a deletion, and when the control message type identifier is "Undo Delete", the processing unit undoes the deletion of user information in the communication terminal; the storage unit is adapted to store user information in the communication terminal.

When the communication terminal is in the possession of another person, the user may send a control message to the communication terminal to delete user information in the lost communication terminal so that the information is not used illegally. This ensures the security of personal information and the stability of communication services.

In addition, when the communication terminal is back to the legal user, the user may send another control message to the communication terminal to undo the deletion of user information in the communication terminal so that the terminal can be used normally.

Although the present invention has been described through several exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A method for controlling user information in a communication terminal, comprising:
determining a received message as a control message for controlling user information in the communication terminal, wherein the control message comprises a check code identifier and a control message type identifier;
authenticating the control message according to the check code identifier; and
executing a corresponding operation on the user information in the communication terminal according to the control message type identifier if the authentication is successful.

2. The method according to claim 1, wherein:
the control message type identifier comprises "Delete" and "Undo Delete"; and
when the control message type identifier is "Delete", the communication terminal executes a deletion and when the control message type identifier is "Undo Delete", the communication terminal undoes the deletion of the user information in the communication terminal.

3. The method according to claim 1, wherein the process of authenticating the control message according to the check code identifier comprises:
comparing a check code in the control message with a check code in the communication terminal and regarding the authentication as successful if the two check codes are identical.

4. The method according to claim 1, wherein the control message further comprises at least one of the following identifiers:
deletion mode identifier, information backup flag, deletion scope identifier and answer flag.

5. The method according to claim 4, wherein:
the deletion mode identifier comprises: Deletion upon Power-on, Deletion upon Power-off, Timed Deletion, and Immediate Deletion; and
the deletion scope identifier comprises: user information in a subscriber identity module ,SIM, all user information stored in the communication terminal, and user information stored in a memory of the communication terminal.

6. The method according to claim 5, further comprising:
executing a corresponding deletion according to the deletion mode identifier, deletion scope identifier or answer flag in the control message when the control message type identifier is "Delete".

7. The method according to claim 4, further comprising:
backing up user information in the communication terminal before the deletion is executed according to a preset default mode or when the control message carries the information backup flag.

8. The method according to claim 5, further comprising:
returning a message of successful controlling to a terminal that sends the control message upon completion of a deletion or an undoing of the deletion when the control message carries an answer flag.

9. The method according to any of claims 1-7, wherein the control message is a short message, an email, or a multimedia message.

10. A communication terminal, comprising:
a storage unit, adapted to store user information in the communication terminal;
a transceiver unit, adapted to receive a control message and transmit the control message to a processing unit; and
the processing unit, adapted to authenticate the control message and execute a corresponding operation on the user information in the storage unit if the authentication is successful according to the control message type identifier.

11. The communication terminal according to claim 10, wherein:
upon completion of a deletion or an undoing of the deletion, the processing unit returns a message of successful controlling to a terminal that sends the control message.
